# EUROPÄISCHE PATENTSCHRIFT

(11) **EP 3 022 007 B1**
(45) Veröffentlichungstag und Bekanntmachung des Hinweises auf die Patenterteilung: **29.08.2018**
(21) Anmeldenummer: 14739783.0
(22) Anmeldetag: 10.07.2014
(51) Int. Cl.: B23K 20/10, H01B 13/012, H01R 4/02, H01R 4/62, H01R 43/02

(54) **VERFAHREN ZUR HERSTELLUNG EINES KNOTENS DURCH SCHWEISSEN MIT GLEICHER BREITE FÜR ZWEI SCHWEISSUNGEN**
METHOD FOR PRODUCING A NODE BY WELDING WITH THE SAME WIDTH FOR TWO WELDS
PROCÉDÉ DE FABRICATION D'UN NOEUD PAR SOUDAGE AVEC LA MÊME LARGEUR POUR DEUX SOUDURES

(30) Priorität: 18.07.2013 DE 102013107637
(43) Veröffentlichungstag der Anmeldung: 25.05.2016
(73) Patentinhaber: Schunk Sonosystems GmbH, 35435 Wettenberg (DE)
(72) Erfinder: RÜHL, Sebastian, 35083 Wetter (DE); STROBEL, Heiko, 35516 Münzenberg (DE); HANIKA, Tim, 35428 Langgöns/Oberkleen (DE)
(74) Vertreter: Stoffregen, Hans-Herbert
(86) Internationale Anmeldenummer: PCT/EP2014/064867
(87) Internationale Veröffentlichungsnummer: WO 2015/007619

(56) Entgegenhaltungen:
- JP-A- 2007 185 706
- JP-A- 2012 124 078
- US-A1- 2004 134 062

## Beschreibung

Die Erfindung bezieht sich auf ein Verfahren zum Herstellen eines Knotens durch Schweißen von zumindest einer Einzeldrähte umfassenden ersten Litze mit zumindest einer Einzeldrähte umfassenden zweiten Litze unterschiedlicher Materialien in einem in Höhe und Breite verstellbaren Verdichtungsraum einer Ultraschallschweißvorrichtung, dessen Breite über zumindest einen Seitenschieber und dessen Höhe durch Abstandsveränderung zwischen Sonotrode und Gegenelektrode der Ultraschallschweißvorrichtung eingestellt werden, wobei die zumindest eine erste Litze bei einer höheren spezifischen Energie oder einem höheren Druck oder einer größeren Amplitude der Ultraschallschwingung als die zumindest eine zweite Litze geschweißt wird.

Zur Herstellung von Knoten, d. h. Durchgangs- und Endknoten, bestehen bei herkömmlichen Anwendungen die Litzen grundsätzlich aus gleichen Materialgruppen, da anderenfalls reproduzierbare Schweißergebnisse nicht erzielbar sind.

Werden Litzen, die aus Einzeldrähten bzw. aus Adern aus Aluminium oder Aluminiummaterial bestehen, miteinander oder mit einem massiven Träger verschweißt, so zeigt sich der Nachteil, dass die eingeleitete Schweißenergie dazu führt, dass das Aluminium im einem Umfang fließt, dass ein Anlegieren an der Sonotrodenfläche bzw. an den seitlichen Begrenzungen eines Verdichtungsraums erfolgt, in dem die Litzen verschweißt werden. Um ungeachtet dessen Aluminiumdrähte untereinander und mit einem aus Kupfer bestehendem Träger zu verschweißen, wird nach der DE 10 2007 026 707 B3 eine spezielle Form eines Verdichtungsraums gewählt, der von einer die Geometrie eines offenen Trapezes aufweisenden Schweißfläche einer Sonotrode begrenzt wird.

Um aus Aluminium und/oder Kupfer bestehende lackierte Drähte mittels Ultraschall zu verbinden, sieht die DE 102 29 565 B4 eine Umhüllende vor, die insbesondere aus einem Kupfermaterial besteht, in die die Drähte eingebracht und sodann mittels Ultraschalleinwirkung verschweißt werden.

Ein Verfahren zum Herstellen einer Schweißverbindung zwischen elektrischen Leitern nach der DE 10 2005 048 368 B3 zeichnet sich dadurch aus, dass ein erster eigensteifer elektrischer Leiter sukzessiv mit zweiten elektrischen Leitern wie Litzen verschweißt wird. Hierdurch ergibt sich der Vorteil, dass der Gesamtquerschnitt der mit dem ersten elektrischen Leiter zu verbindenden zweiten Leiter größer sein kann als der Querschnitt von Litzen, die üblicherweise mit der zum Einsatz gelangenden Ultraschallschweißvorrichtung verschweißt werden können.

Der DE 10 2011 014 801 A1 ist ein Verfahren zum Verschweißen von Leitern zu entnehmen, bei dem zunächst dünne erste Leiter zu einem ersten Knoten und sodann dieser mit dickeren zweiten Leitern zu einem Gesamtknoten verschweißt werden.

Der US 2004/0134062 A1 ist ein Verfahren zu entnehmen, um Leiter aus unterschiedlichen Materialien zu verschweißen. Hierzu wird zunächst ein erster Leiter mittels Ultraschall derart umgeformt, dass sich ein rechteckiger Querschnitt ergibt. Anschließend wird mit dem diesbezüglichen Leiter ein zweiter Leiter verschweißt. Zum Verschweißen wird ein Verdichtungsraum benutzt, in den eine Sonotrode eintaucht, mittels der die zum Verschweißen erforderlichen Ultraschallschwingungen übertragen werden.

Die JP 2007-185706 sieht ein Verfahren vor, nach dem sukzessiv Litzen bzw. Knoten miteinander verschweißt werden, so dass die einzuleitende Energie zum Verschweißen der einzelnen Knoten geringer als die ist, wenn sämtliche Knoten gleichzeitig als Einheit verschweißt werden würden.

Ein Verfahren zum Verschweißen von Leitern mit einem Stator ist aus der JP 2012-124078 bekannt.

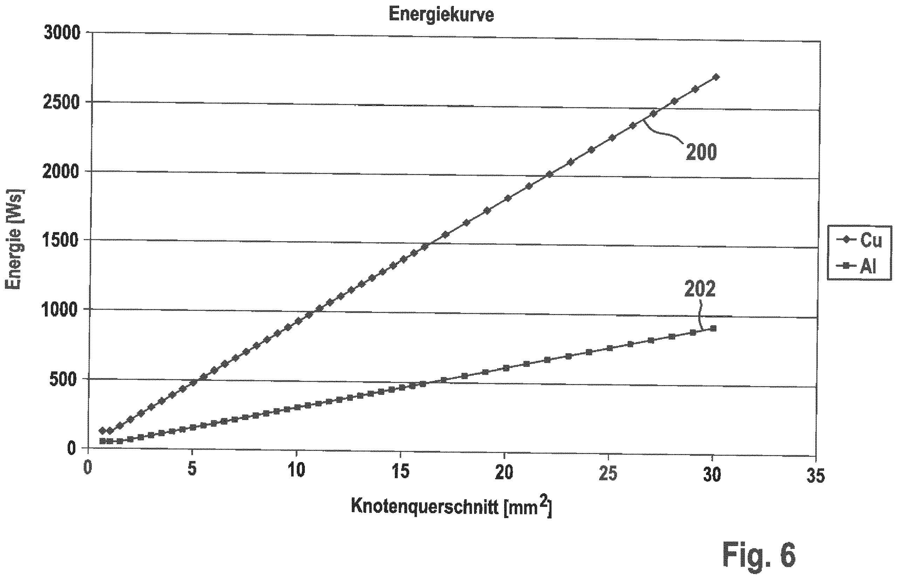

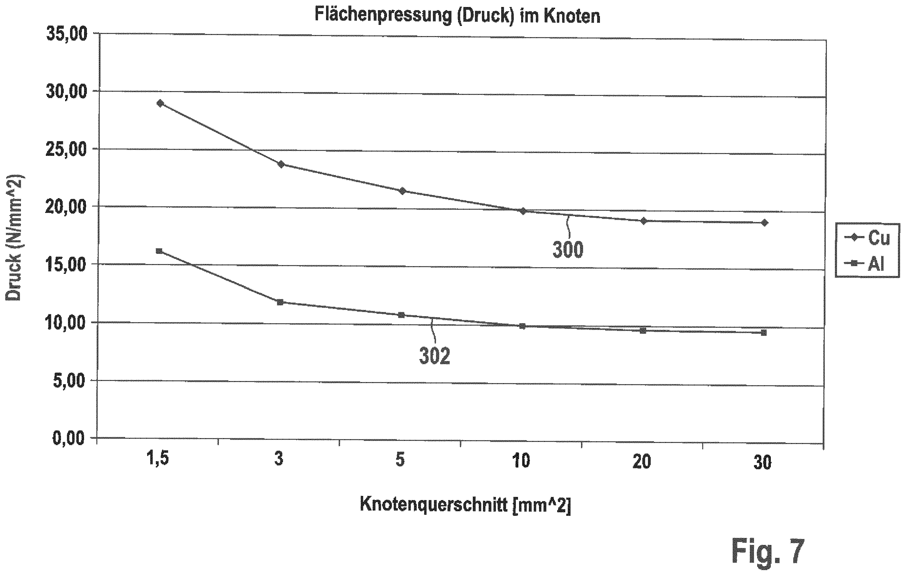

Der vorliegenden Erfindung liegt die Aufgabe zu Grunde, ein Verfahren zuvor beschriebener Art so weiterzubilden, dass Litzen aus einem ersten Material mit Litzen eines zweiten Materials, das deutlich abweichende Schweißeigenschaften von dem des ersten Materials aufweist, derart zu einem Knoten verschweißt werden können, dass reproduzierbare Schweißergebnisse erzielbar sind, insbesondere reproduzierbar die Geometrie und Zug- und Schälfestigkeit des herzustellenden Knotens. Deutlich unterschiedliche Schweißeigenschaften bedeutet, dass die spezifische Energie, der optimale Schweißdruck und/oder die optimale Amplitude zur Erzielung einer ordnungsgemäßen Schweißung stark voneinander abweichen, wie sich aus den Fig. 6 und 7 ergibt.

Zur Lösung der Aufgabe sieht die Erfindung im Wesentlichen vor, dass als Materialien für die zumindest eine erste und die zumindest eine zweite Litze solche ausgewählt werden, dass in Bezug auf das Material der zumindest einen ersten Litze zum Schweißen eines ordnungsgemäßen Teilknotens zumindest 25 % mehr spezifische Energie eingeleitet werden muss als zum ordnungsgemäßen Schweißen der zumindest einen zweiten Litze, dass die zumindest eine erste Litze in den Verdichtungsraum auf die den Verdichtungsraum bodenseitig begrenzende Sonotrode gelegt wird, die Einzeldrähte des zumindest einen ersten Leiters sodann zu einem Teilknoten verschweißt werden, wobei der Verdichtungsraum auf eine Breite B derart eingestellt worden ist, dass der Teilknoten den von der Sonotrode begrenzten Boden des Verdichtungsraums vollständig abdeckt, dass anschließend der Verdichtungsraum geöffnet wird, dass in dem Verdichtungsraum auf den Teilknoten die zumindest eine zweite Litze gelegt wird, dass sodann der Verdichtungsraum geschlossen wird, wobei während des Verschweißens die Breite des Verdichtungsraums gleich der Breite B ist, wobei als Material für die erste Litze Kupfer oder eine Kupferlegierung und/oder als Material für die zweite Litze Aluminium oder eine Aluminiumlegierung verwendet wird.

Erfindungsgemäß erfolgt ein zweistufiges Schweißen der aus Einzeldrähten bestehenden Litzen unterschiedlicher Materialien derart, dass in dem Verdichtungsraum zunächst aus der oder den ersten Litzen ein Teilknoten geschweißt wird, für den z. B. eine höhere Schweißenergie im Vergleich zu der bzw. den weiteren aus einem anderen Material bestehenden zweiten Litze bzw. Litzen benötigt wird. Zusätzlich ist der Verdichtungsraum derart eingestellt, dass die zur Herstellung des Knotens erforderliche erste Litze bzw. erforderlichen ersten Litzen den Boden des Verdichtungsraums vollständig abdecken, so dass nach dem Schweißen ein Teilknoten zur Verfügung steht, der den Boden bedeckt. Dabei wird der Boden von der Sonotrode bzw. einem Abschnitt von dieser gebildet.

Nach dem Schweißen des Teilknotens wird der Verdichtungsraum geöffnet, ohne dass dessen Breiteneinstellung verändert wird. Nicht veränderte Breiteneinstellung schließt jedoch nicht aus, dass der Seitenschieber nach Beendigung des ersten Schweißschrittes druckentlastet werden kann, so dass beim Einlegen der zumindest einen zweiten Litze breitenmäßig ein größerer Verdichtungsraum zur Verfügung steht. Dies ist jedoch kein zwingendes Merkmal. Vielmehr kann die Breite des Verdichtungsraums bei geöffnetem Verdichtungsraum unverändert bleiben. Mit anderen Worten kann ggfs. der Anpressdruck reduziert werden bzw. der Seitenscheiber drucklos sein, um insbesondere ein problemloses Anheben des Ambosses zum Öffnen des Verdichtungsraums zu ermöglichen.

Sodann wird bzw. werden die zweite Litze bzw. zweiten Litzen in den geöffneten Verdichtungsraum auf den Teilknoten gelegt, um sodann nach Schließen des Verdichtungsraums entsprechend der benötigten Schweißenergie für die zweite Litze bzw. zweiten Litzen Schweißenergie einzuleiten, um die Einzeldrähte der zweiten Litze bzw. Litzen im erforderlichen Umfang untereinander und mit den Teilknoten zu verschweißen. Bei diesem zweiten Schweißprozessschritt weist entsprechend der erfindungsgemäßen Lehre der Verdichtungsraum die Breite B auf, auf den der Verdichtungsraum bei dem ersten Schweißprozessschritt eingestellt worden ist. Insbesondere ist vorgesehen, dass die Breite des Verdichtungsraums auf die Breite des herzustellenden Knotens eingestellt wird und während der Schweißungen unverändert bleibt.

Bei Beachtung der diesbezüglichen Maßnahmen hat sich überraschenderweise gezeigt, dass konstante Schweißergebnisse in Bezug z. B. auf Festigkeit oder Geometrie des Knotens erzielbar sind. Auch treten im Vergleich zu Verfahren, bei denen das sukzessive Einlegen in vorbestimmter Reihenfolge der zu schweißenden Litzen nicht erfolgt, Aderdeformationen bzw. Aderbruch im merklichen Umfang nicht auf.

Aufgrund der erfindungsgemäßen Lehre kann die Verbindungsfläche zwischen dem Teilknoten und der bzw. den zweiten Litze bzw. Litzen eingestellt werden, so dass in gewünschtem Umfang eine Verbindungsfläche zur Verfügung gestellt wird, die den unterschiedlichen Materialien und deren Schweißparametern Rechnung trägt. Insbesondere kann hierdurch die Schweißbreite vergrößert werden. Gemäß der Erfindung besteht die zumindest eine erste Litze aus Kupfer oder einer Kupferlegierung und/oder die zumindest eine zweite Litze aus Aluminium oder einer Aluminiumlegierung.

Weitere Merkmale ergeben sich aus den abhängigen Ansprüchen.

Es zeigen:
- Fig. 1: eine Prinzipdarstellung einer Ultraschallschweißanordnung,
- Fig. 2 bis 5: Prinzipdarstellungen des Verfahrensablaufs zum Schweißen von Knoten,
- Fig. 6: eine grafische Darstellung des Energieeintrags in Litzen in Abhängigkeit von herzustellendem Knotenquerschnitt sowie Material der Litzen und
- Fig. 7: eine grafische Darstellung des zum Schweißen benötigten Drucks in Abhängigkeit des herzustellenden Knotenquerschnitts und des Materials der Litze.

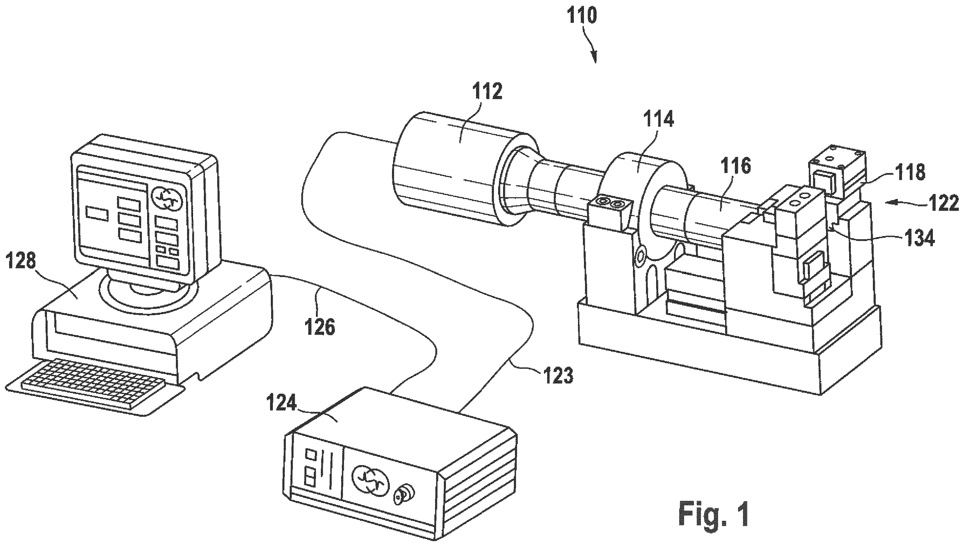

In Fig. 1 ist rein prinzipiell eine Ultraschallschweißanordnung dargestellt, mit der entsprechend der erfindungsgemäßen Lehre Litzen zu Durchgangs- oder Endknoten verschweißt werden, die aus Materialien mit deutlich unterschiedlichen Schweißeigenschaften bestehen. Deutlich unterschiedliche Schweißeigenschaften bedeuten grundsätzlich, dass die zu schweißenden Materialien bezüglich spezifischer Energie, Druck oder Schweißamplitude der Ultraschallschwingungen sich um mehr als 25 % unterscheiden. Die spezifische Energie ist dabei die pro mm² zu schweißender Litze einzuleitende Energie, um ein ordnungsgemäßes Schweißergebnis zu erzielen. Druck ist dabei die Flächenpressung, die auf die zu schweißende Litze bzw. zu schweißenden Litzen in Richtung der Sonotrode, also deren den Verdichtungsraum begrenzender Fläche einwirkt.

Mit anderen Worten ist der erforderliche Druck zum Verschweißen des zweiten Materials zumindest um 25 % kleiner als der Druck zum Verschweißen für das erste Material, wobei gleicher Querschnitt des zu verschweißenden Materials bei gleicher Breite des Verdichtungsraums zu Grunde gelegt wird.

Die Schwingungsamplitude beim Verschweißen des zweiten Materials ist zumindest 10 % kleiner als die Schwingungsamplitude beim Verschweißen des ersten Materials, wobei der gleiche Querschnitt des zu verschweißenden ersten bzw. zweiten Materials zu Grunde gelegt wird.

Die Anordnung umfasst eine Ultraschallschweißvorrichtung 110, die in gewohnter Weise einen Konverter 112, ggfs. einen Booster 114 sowie eine Sonotrode 116 umfasst, die insgesamt als Schwinger bezeichnet werden. Der Sonotrode 116 bzw. einem Abschnitt dieser ist eine mehrteilige Gegenelektrode 118 - auch Amboss genannt - sowie ein Seitenschieber 134 zugeordnet. Eine diesbezügliche Konstruktion wird ausführlich in der DE 37 19 083 C1 beschrieben, auf deren Offenbarung ausdrücklich Bezug genommen wird.

Die Sonotrode 116 bzw. deren Fläche, die Gegenelektrode 118 sowie der Schieber 120 begrenzen einen Verdichtungsraum 122, in den die zu verschweißenden aus Einzeldrähten oder Adern bestehenden ersten und zweiten Litzen eingelegt und verschweißt werden.

Der Konverter 112 ist über eine Leitung 123 mit einem Generator 124 verbunden, der seinerseits über eine Leitung 126 zu einem Rechner 128 führt, über den eine Steuerung der Schweißprozesse erfolgt und in den die Schweißparameter eingegeben bzw. abgespeicherte Werte abgerufen werden können. Insoweit wird auf hinlänglich bekannte Techniken verwiesen.

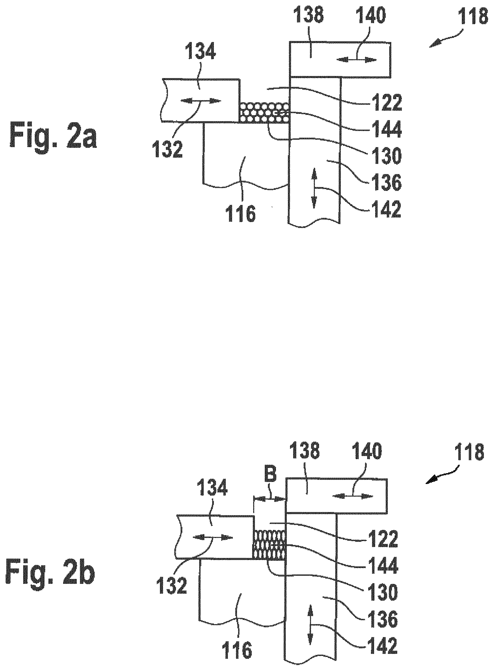

Mit einer entsprechenden Ultraschallschweißanordnung und der den Verdichtungsraum 122 umfassenden Ultraschallschweißvorrichtung werden erfindungsgemäß erste und zweite Litzen zu End- oder Durchgangsknoten verschweißt. Der Verfahrensablauf beim Schweißen wird anhand der Fig. 2 bis 5 erläutert, in denen für gleiche Elemente gleiche Bezugszeichen verwendet werden.

Den Fig. 2 bis 5 ist ein Ausschnitt des Verdichtungsraums 122 mit den diesen begrenzenden Elementen dargestellt. Der Verdichtungsraum 122 wird bodenseitig von einer Fläche 130 der Sonotrode 116 begrenzt, die als Schweißfläche wirkt. Seitlich wird der Verdichtungsraum 122 zu dem durch einen in Richtung des Doppelpfeils 132 verstellbaren Seitenschieber 134 und gegenüberliegend von einer sogenannten Tuschierplatte 136 begrenzt, die Teil der Gegenelektrode 118 bildet. Die Tuschierplatte 136 nimmt ein Querhaupt 138 auf, das entsprechend dem Doppelpfeil 140 verstellbar ist und beim Verdichten bzw. Verschweißen der in dem Verdichtungsraum 122 einbringbaren Litzen gegenüberliegend zum Boden des Verdichtungsraums 122, also der Fläche 130 der Sonotrode 116 verläuft. Die Tuschierplatte 136 ist entlang des Doppelpfeils 142 verstellbar, um das Querhaupt 138 in Richtung der Sonotrode 118 zu verstellen und somit den erforderlichen Druck auf die zu verschweißenden Litzen zum Kompaktieren und während des Schweißens ausüben zu können. Die den Verdichtungsraum 122 begrenzenden Flächen von Tuschierplatte 136 und Seitenschieber 134 einerseits und die Fläche 130 der Sonotrode 116 und die dieser zugewandten Fläche des Querhaupts 138 andererseits verlaufen insbesondere jeweils parallel zueinander, wie sich auch aus den Figuren ergibt. Die Begrenzungsflächen können des Weiteren strukturiert sein.

In Fig. 2a ist der Verdichtungsraum 122 geöffnet. In diesen werden zunächst ein oder mehrere erste Litzen 144 eingelegt, die jeweils aus Einzeldrähten zusammengesetzt sind. Dabei ist die Anzahl der Einzeldrähte bzw. deren Volumen derart, dass nach Positionieren des Seitenschiebers 134 auf eine gewünschte Breite B (Fig. 2b) der Boden des Verdichtungsraums 122 vollständig von den Einzeldrähten bedeckt ist. Die Einstellung auf die Breite B erfolgt im Ausführungsbeispiel nach Einlegen der ersten Litzen 144, kann aber auch vor Einlegen der ersten Litzen 144 vorgenommen werden.

Bei den ersten Litzen kann es sich um solche aus Kupfer oder Kupferlegierungen oder Materialien mit einem Kupfer-Anteil von zumindest 40 % handeln.

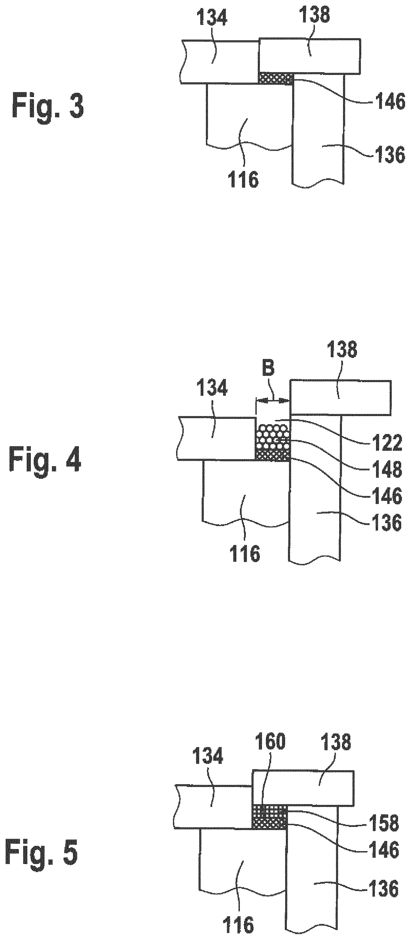

Nachdem die ersten Litzen in den Verdichtungsraum 122 eingelegt und der Verdichtungsraum 122 auf die Breite B eingestellt ist, wird das Querhaupt 138 in der zeichnerischen Darstellung nach links verschoben und abgesenkt, um die ersten Litzen 144 zu kompaktieren und zu einem Teilknoten 146 zu schweißen, wie dies aus der Fig. 3 erkennbar ist. Dabei wird die Sonotrode 118 in Schwingung mit einer Frequenz vorzugsweise im Bereich von 20 kHz versetzt. Die Amplitude liegt zwischen 15 µm und 35 µm, je nach zu schweißendem Material.

Zum Schweißen der ersten Litzen wird aus dem Rechner 128 ein Parametersatz mit z. B. Knotenbreite, Energie, Druck, Amplitude oder Differenzmaß oder Schweißmaß oder Zeit je nach gewähltem Schweißmodus abgerufen, der die Materialien der ersten Litzen und die Geometrie des herzustellenden Teilknotens berücksichtigt. Während des Kompaktierens und Schweißens werden Kompaktiermaß, Schweißmaß, Zeitdauer, Druck, Verstellweg (Änderung der Höhe Δh des Verdichtungsraums) überwacht, um nur einige wesentliche Parameter zu nennen.

Nach Schweißen des Teilknotens 146 wird entsprechend der Fig. 4 der Verdichtungsraum 122 geöffnet, ohne dass jedoch die eingestellte Breite B des Verdichtungsraums 122 verändert wird. Dabei besteht die Möglichkeit, dass der Seitenschieber 134 in der vor dem Schweißen der ersten Litzen 144 vorgegebenen Position verbleibt, oder der Seitenschieber 134 wird durch Druckreduzierung entlastet, um die Vertikalbewegung (Doppelpfeil 142), d. h. das Verstellen der Tuschierplatte 136 zusammen mit dem Querhaupt 138 zum Öffnen des Verdichtungsraums 122 zu erleichtern. Gleichzeitig wird das Querhaupt 138 in der zeichnerischen Darstellung nach rechts verstellt.

Sodann werden in den Verdichtungsraum 122 eine Litze oder mehrere zweite Litzen 148 eingelegt, die aus einem Material bestehen, das im Vergleich zu dem Material der ersten Litzen 144 deutlich unterschiedliche Schweißeigenschaften aufweist, d. h., in Bezug auf spezifische Energie, Druck oder Amplitude unterschiedlich sind, wobei davon ausgegangen wird, dass die Abweichung zumindest bezüglich der spezifischen Energie zumindest 25 % beträgt.

Grundsätzlich wird als Kriterium die zum Schweißen erforderliche spezifische Schweißenergie ausgewählt, wobei zunächst die Litzen zu dem Teilknoten geschweißt werden, die eine höhere spezifische Schweißenergie benötigen. Die spezifische Schweißenergie kann jedoch als Synonym für andere Materialcharakteristika verstanden werden, die ausgewählt werden, um entsprechend der erfindungsgemäßen Lehre einen Knoten herzustellen, wobei das entsprechende Materialcharakteristikum zwischen den ersten und zweiten Litzen 144, 148 stark voneinander abweicht, wie zuvor erläutert worden ist.

Nachdem die zweite Litze bzw. Litzen 148 in den Verdichtungsraum 122 eingelegt worden sind und der Verdichtungsraum 122 erneut die Breite B aufweist, die beim ersten Schweißprozess, also beim Herstellen des Teilknotens 146 gewählt worden ist, werden entsprechend den Erläuterungen des Verfahrensablaufs nach Fig. 2 und 3 der Verdichtungsraum 122 durch Verstellen des Querhaupts 138 und Absenken der Tuschierplatte 136 verkleinert und die zweiten Litzen 148 werden kompaktiert und deren Einzeldrähte oder Adern untereinander bzw. mit dem Teilknoten 146 verschweißt. Es bildet sich ein zweiter Teilknoten 158, der mit dem ersten Teilknoten 146 zur Bildung des Gesamtknotens 160 verschweißt worden ist.

Erfolgte zum Öffnen des Verdichtungsraums 122 nach Beendigung des ersten Schweißvorganges eine Druckentlastung des Seitenschiebers 134, so wird vor Durchführung des zweiten Schweißprozesses der Druck, der auf den Seitenschieber 134 einwirkt, zunächst wieder aufgebaut, damit beim zweiten Schweißprozess der Verdichtungsraum 122 erneut die Breite B aufweist.

Bei den zweiten Litzen 148 handelt es sich insbesondere um Litzen, deren Einzeldrähte aus Aluminium oder Aluminiumlegierungen bestehen. Die erforderlichen Schweißparameter sind gleichfalls in dem Rechner 128 abgelegt und werden entsprechend abgerufen. Es erfolgt gleichfalls eine Prozessüberwachung beim Kompaktieren und Schweißen, wobei Kompaktiermaß, Schweißmaß, Zeitdauer, ggfs. Differenzmaß und Energie erfasst werden.

Aufgrund der erfindungsgemäßen Lehre sind im Vergleich zum Stand der Technik konstante Schweißergebnisse erzielbar, die reproduzierbar sind. Eine prozesssichere Herstellung von Knoten, die aus einem Materialmix bestehen, wird erreicht. Der Knotenaufbau ist in seiner Geometrie reproduzierbar.

Bei dem ersten und zweiten Schweißprozess, also beim Schweißen der zumindest einen ersten Litze 144 und sodann beim Schweißen der zumindest einen zweiten Litze 148 kann eine Prozessüberwachung derart erfolgen, dass der erste und der zweite Prozessschritt unterschiedlich in Bezug auf Toleranzen oder der Überwachung des Schweißablaufs und des Ergebnisses durchgeführt werden kann. Es ist eine individuelle Anpassung möglich, d. h. unterschiedliche Parameter und Toleranzen kommen zum Tragen. Beim Verschweißen der aus Kupfer oder Kupfer enthaltenden zumindest einen ersten Litze 144 kann z. B. die Schweißzeit überwacht werden, nachdem der erforderliche Energieeintrag erfolgt ist. Liegt die Schweißzeit nicht innerhalb vorgegebener Werte, so wird der Schweißprozess als nicht ordnungsgemäß bewertet.

Beim Schweißen der zumindest einen zweiten Litze 148 aus Aluminium oder Aluminium enthaltend kann das Differenzmaß zu Grunde gelegt werden, d. h. nach Ermittlung des Kompaktiermaßes wird während des Schweißens der Verstellweg, also die Änderung der Höhe des Verdichtungsraums 122 überwacht. Wird der zuvor festgelegte Weg erreicht, wird überprüft, ob die erforderliche Energie eingetragen worden ist. Trifft dies nicht zu, so wird von einer fehlerhaften Schweißung ausgegangen.

Anhand der Fig. 6 und 7 soll rein prinzipiell verdeutlicht werden, was unter dem Merkmal "stark voneinander abweichender Schweißeigenschaften der zu schweißenden Materialien" zu verstehen ist. In Fig. 6 ist die in die zu schweißenden Materialien einzutragende Energie in Abhängigkeit vom Knotenquerschnitt aufgetragen. In der oberen mit dem Bezugszeichen 200 gekennzeichneten Kurve ist der Energieeintrag in aus Kupfer bestehende Litzen dargestellt. Der Energieeintrag in Abhängigkeit vom Knotenquerschnitt ist als spezifische Energie zu bezeichnen. In der Kurve 202 ist der Energieeintrag in aus Aluminium bestehenden Litzen in Abhängigkeit vom Knotenquerschnitt dargestellt. Man erkennt starke Abweichung zwischen der einzutragenden Energie als Funktion des Knotenquerschnitts in Abhängigkeit vom Material, um ordnungsgemäße Schweißergebnisse zu erzielen.

Knotenquerschnitt ist die Fläche, die senkrecht zur Litzenlängsachse und senkrecht zur Schweißfläche verläuft, die ein Abschnitt der Sonotrode ist, der den Verdichtungsraum bodenseitig begrenzt.

In Fig. 7 ist als Materialcharakteristikum der Druck in Abhängigkeit vom herzustellenden Knotenquerschnitt dargestellt, und zwar ebenfalls für die Materialien Kupfer (Kurve 300) und Aluminium (Kurve 302). Wird als Materialcharakteristikum zur Auswahl der Reihenfolge des Schweißens entsprechend der erfindungsgemäßen Lehre der Druck, also die in Richtung der Schweißfläche der Sonotrode beim Schweißen auf die Adern oder Drähtchen der Litzen einwirkende Flächenpressung, in Abhängigkeit vom Knotenquerschnitt ausgewählt, weicht der zum Schweißen erforderliche Druck für Kupfer stark von dem von Aluminium ab. Somit wird zunächst der Teilknoten aus Kupfer oder Kupfer enthaltend und anschließend werden die Litze bzw. die Litzen aus Aluminium oder Aluminium enthaltend geschweißt.

Das erste und zweite Material unterscheidet sich bezüglich des Schweißparameter-Drucks dahingehend, dass zum Verschweißen des zweiten Materials der einzuleitende Druck zumindest um 25 % kleiner als der Druck zum Verschweißen für das erste Material ist. Bei dieser Bewertung berücksichtigt man gleichen Querschnitt der zu verschweißenden Litzen, wobei die Breite des Verdichtungsraums gleich ist. Entsprechend der Erfindung werden Litzen verschweißt, die bezüglich ihrer Materialcharakteristika dahingehend voneinander abweichen, dass zum Verschweißen die Amplituden der Ultraschallschwingungen um zumindest 25 % abweichen, d. h., dass die Amplitude der Ultraschallschwingungen zum Verschweißen des zweiten Materials zumindest um 10 % kleiner als die Amplitude der Ultraschallschwingungen zum Verschweißen des ersten Materials ist.

## Patentansprüche

1. Verfahren zum Herstellen eines Knotens durch Schweißen von zumindest einer Einzeldrähte umfassenden ersten Litze (144) mit zumindest einer Einzeldrähte umfassenden zweiten Litze (148) unterschiedlicher Materialien in einem in Höhe und Breite verstellbaren Verdichtungsraum (122) einer Ultraschallschweißvorrichtung (110), dessen Breite über zumindest einen Seitenschieber (134) und dessen Höhe durch Abstandsveränderung zwischen Sonotrode (116) und Gegenelektrode (118) der Ultraschallschweißvorrichtung eingestellt werden, wobei die zumindest eine erste Litze bei einer höheren spezifischen Energie, einem höheren Druck oder einer größeren Amplitude der Ultraschall schwingung als die zumindest eine zweite Litze geschweißt wird,
**dadurch gekennzeichnet ,**
**dass** als Materialien für die zumindest eine erste und die zumindest eine zweite Litze (144, 148) solche ausgewählt werden, dass in Bezug auf das Material der zumindest einen ersten Litze zum Schweißen eines ordnungsgemäßen Teilknotens (146) zumindest 25 % mehr spezifische Energie eingeleitet werden muss als zum ordnungsgemäßen Schweißen der zumindest einen zweiten Litze, dass die zumindest eine erste Litze (144) in den Verdichtungsraum (122) auf die den Verdichtungsraum bodenseitig begrenzende Sonotrode gelegt wird, die Einzeldrähte des zumindest einen ersten Leiters sodann zu einem Teilknoten (146) verschweißt werden, wobei der Verdichtungsraum auf eine Breite B derart eingestellt worden ist, dass der Teilknoten den von der Sonotrode (116) begrenzten Boden des Verdichtungsraums vollständig abdeckt, dass anschließend der Verdichtungsraum geöffnet wird, dass in dem Verdichtungsraum (120) auf den Teilknoten die zumindest eine zweite Litze (14) gelegt wird, dass sodann der Verdichtungsraum geschlossen wird, wobei während des Schweißens die Breite des Verdichtungsraums gleich der Breite B ist, wobei als Material für die erste Litze Kupfer oder eine Kupferlegierung und/oder als Material für die zweite Aluminium oder eine Aluminiumlegierung verwendet wird.

2. Verfahren nach Anspruch 1,
**dadurch gekennzeichnet,**
**dass** vor oder nach dem Einlegen der zumindest einen ersten Litze (144) in den Verdichtungsraum (122) dessen Breite auf Breite B des herzustellenden Knotens (160) eingestellt wird.

3. Verfahren nach Anspruch 1 oder 2,
**dadurch gekennzeichnet,**
**dass** nach dem Schweißen der zumindest einen ersten Litze (144) zu dem Teilknoten (146) der Seitenschieber (134) druckentlastet wird und vor dem Schweißen der zumindest einen zweiten Litze (148) der Seitenschieber derart druckbeaufschlagt wird, dass der Verdichtungsraum die Breite B aufweist.

4. Verfahren nach einem der vorhergehenden Ansprüche,
**dadurch gekennzeichnet,**
**dass** zum Bewerten eines ordnungsgemäßen Schweißens der zumindest ersten Litze (144) ein anderer Prozessparameter als der zum Überwachen eines ordnungsgemäßen Schweißens der zumindest zweiten Litze (148) überwacht wird.

5. Verfahren nach einem der vorhergehenden Ansprüche,
**dadurch gekennzeichnet,**
**dass** zum Überwachen eines ordnungsgemäßen Schweißens der zumindest einen Litze (144) der erforderliche Energieeintrag nach vorgegebener Schweißzeit überwacht wird.

6. Verfahren nach einem der vorhergehenden Ansprüche,
**dadurch gekennzeichnet,**
**dass** zur Ermittlung eines ordnungsgemäßen Schweißens der zumindest einen zweiten Litze (148) der Energieeintrag in Abhängigkeit von der Höhenänderung des Verdichtungsraums (122), insbesondere Verstellung der Gegenelektrode (118) in Richtung der Sonotrode (116), überwacht wird.

## Claims

1. A method for producing a node by welding at least one first stranded wire (144) comprising individual wires to at least one second stranded wire (148) comprising individual wires, the stranded wires being of different materials, in a compression chamber (122) with adjustable height and width of an ultrasonic welding device (110), the width being adjusted by means of at least one lateral slide (134) and the height by changing the distance between a sonotrode (116) and a counter electrode (118) of the ultrasonic welding device, the at least one first stranded wire being welded with a higher specific energy, under a higher pressure or with a greater ultrasonic vibration amplitude than the at least one second stranded wire,
**characterized in that**
such materials are selected for the at least one first and the at least on second stranded wires (144, 148) that with respect to the material of the at least one first stranded wire at least 25% more energy must be input for welding a proper partial node (146) than for proper welding of the at least one second stranded wire,
the at least one first stranded wire (144) is inserted in the compression chamber (122) onto the sonotrode deliminating the compression chamber at bottom side and its individual wires are welded to a partial node (146), wherein the compression chamber is set to a width B in such a manner that the partial node completely covers the bottom of the compression chamber delimited by the sonotrode (116), that then the compression chamber is opened, that the at least one second stranded wire is inserted on the partial node in the compression chamber (120), and after closing the compression chamber the at least one second stranded wire (148) is welded to the partial node to yield an aggregate node, wherein the width of the compression chamber when welding the aggregate node is equal to the width B, wherein copper or a copper alloy is used as the material of the at least one first stranded wire (144) and/or aluminum or an aluminum alloy is used as the material of the at least one second stranded wire (148).

2. The method according to claim 1,
**characterized in that**
the width of the compression chamber (122) is set to the width B of the node (160) to be produced before the at least one first stranded wire (144) is inserted in said chamber.

3. The method according to claim 1 or 2,
**characterized in that**
after welding the at least one first stranded wire (144) to the partial node (146), the lateral slide (134) is depressurized and pressure is reapplied to the lateral slide such that the compression chamber has the width B before the at least one second stranded wire (148) is welded.

4. The method according to one of the previous claims,
**characterized in that**
for evaluating the proper welding of the at least one first stranded wire (144), a process parameter other than the one for monitoring proper welding of the at least one second stranded wire (148) is monitored.

5. The method according to one of the previous claims,
**characterized in that**
the energy input required is monitored based on the specified welding time for monitoring the proper welding of the at least one stranded wire (144).

6. The method according to one of the previous claims,
**characterized in that**
for determining proper welding of the at least one second stranded wire (148), the energy input depending on the height change of the compression chamber (122), in particular the adjustment of the counter electrode (118) in the direction of the sonotrode (116) is monitored.

## Revendications

1. Procédé de fabrication d'un noeud par soudage d'au moins un premier toron (144) comprenant des fils individuels à au moins un second toron (148) comprenant des fils individuels constitués de différents matériaux dans une chambre de compression (122) réglable en hauteur et en largeur d'un dispositif de soudage par ultrasons (110), dont la largeur est réglable au moyen d'au moins un coulisseau latéral (134) et dont la hauteur est réglable en modifiant l'écart entre la sonotrode (116) et la contre-électrode (118) du dispositif de soudage par ultrasons, sachant que ledit au moins un premier toron est soudé avec une énergie spécifique plus élevée, une pression plus élevée ou une plus grande amplitude de la vibration ultrasonore que ledit au moins un second toron, **caractérisé en ce**
**que** sont sélectionnés comme matériaux pour ledit au moins un premier toron et ledit au moins un second toron (144, 148) des matériaux tels, que pour souder un noeud partiel (146) correct et concernant le matériau dudit au moins un premier toron, au moins 25 % d'énergie spécifique doit être introduite en plus que pour le soudage correct dudit au moins un second toron, que ledit au moins un premier toron (144) est placé dans la chambre de compression (122) sur la sonotrode délimitant le fond de ladite chambre de compression et que les fils individuels dudit au moins un premier conducteur sont soudés ensuite de manière à former un noeud partiel (146), sachant que la chambre de compression a été réglée à une largeur B de telle sorte que le noeud partiel recouvre complètement le fond de la chambre de compression délimité par la sonotrode (116), qu'ensuite, la chambre de compression est ouverte, que ledit au moins un second toron (14) est placé sur le noeud partiel dans la chambre de compression (120), qu'ensuite la chambre de compression est fermée, sachant que pendant le soudage, la largeur de la chambre de compression est égale à la largeur B, sachant que pour le premier toron est utilisé comme matériau du cuivre ou un alliage de cuivre et/ou que pour le second toron est utilisé de l'aluminium ou un alliage d'aluminium.

2. Procédé selon la revendication 1,
**caractérisé en ce**
**qu'**avant ou après le positionnement dudit au moins un premier toron (144) dans la chambre de compression (122), la largeur de ladite chambre de compression est réglée sur la largeur B du noeud à fabriquer (160).

3. Procédé selon la revendication 1 ou 2,
**caractérisé en ce**
**qu'**après le soudage dudit au moins un premier toron (144) pour former le noeud partiel (146), le coulisseau latéral (134) est détendu par réduction de pression et qu'avant le soudage dudit au moins un second toron (148), ledit coulisseau latéral est soumis à une pression de manière à ce que la chambre de compression présente la largeur B.

4. Procédé selon une des revendications précédentes,
**caractérisé en ce**
**qu'**est surveillé, pour évaluer le soudage correct dudit au moins un premier toron (144), un autre paramètre de processus que le paramètre destiné à surveiller le soudage correct dudit au moins un second toron (148).

5. Procédé selon une des revendications précédentes,
**caractérisé en ce**
**que** pour surveiller le soudage correct dudit au moins un toron (144), l'apport d'énergie requis est surveillé après le temps de soudage prescrit.

6. Procédé selon une des revendications précédentes,
**caractérisé en ce**
**que** pour déterminer le soudage correct dudit au moins un second toron (148), l'apport d'énergie est surveillé en fonction du changement de hauteur de la chambre de compression (122), notamment en fonction du déplacement de la contre-électrode (118) en direction de la sonotrode (116).
